# EUROPEAN PATENT APPLICATION

(11) **EP 4 227 657 A1**
(43) Date of publication of application: **16.08.2023**
(21) Application number: 22156009.7
(22) Date of filing: 10.02.2022
(51) Int. Cl.: G01L 5/13

(54) **MEASURING DEVICE FOR MEASURING FORCES AND/OR MOMENTS BETWEEN A TOWING VEHICLE AND A TRAILER VEHICLE OF A VEHICLE COMBINATION WITH TEMPERATURE COMPENSATION**

(71) Applicant: ZF CV Systems Global GmbH, 3006 Bern (CH)
(72) Inventor: BRÜTT, Mirko, 31832 Springe (DE); PFEFFERKORN, Daniel, 30159 Hannover (DE); SPREMBERG, Jan, 30974 Wennigsen (DE); THANGAPPAPILLAI, Aravind Muthu Suthan, 629402 Tamilnadu (IN); THIRAVIAM, Natarajan, 600127 Chennai (IN)
(74) Representative: ZF Friedrichshafen AG

(57) **Abstract**

The invention relates to a measuring device for measuring forces and/or moments between a towing vehicle and a trailer vehicle of a vehicle combination, with a carrier which exhibits several measuring arms and which is capable of being arranged on and connected to a hitching mechanism for coupling the towing vehicle with the trailer vehicle, a sensor unit sensing a force-induced and/or moment-induced deformation of each of the measuring arms, an electronic measured-data acquisition and evaluation unit which is electrically connected or capable of being connected to the sensor unit and which is designed to acquire and evaluate electrical signals of the sensor unit in all three directions in space, brought about by force-induced and/or moment-induced deformations of the hitching mechanism. The measuring device comprises a temperature compensation module that reduces temperature induced measurement errors.

## Description

The invention relates to a measuring device for measuring forces and/or moments between a towing vehicle and a trailer vehicle of a vehicle combination. In addition, the invention relates to a vehicle combination with such a measuring device.

Hitching mechanisms of vehicle combinations, for coupling a towing vehicle with a trailer vehicle, for instance mouth-type couplings or fifth-wheel couplings on load trains or tractor-trailer trains, have to be capable of transmitting large coupling forces or mechanical stresses in all three directions in space, and of guaranteeing a secure connection of the vehicles at any time.

A continuous measurement of the mechanical stresses arising at such a hitching mechanism can be utilized, in addition to the permanent monitoring of the tractive forces and shearing forces between the vehicles coupled with one another, for the purpose of ascertaining further important current information. To be mentioned here are, for instance, the articulation angle of the coupling, the loading state of the trailer and/or the inclination of the vehicle body. This information can be made available as controlled variables for vehicle-dynamics control systems in vehicle combinations, for instance for electronic braking systems, electronic stability-control systems, electronic level-control systems and/or driver-assistance systems.

However, it is difficult to measure relevant forces and moments at the coupling-point between the two vehicles with a sufficiently high sensitivity for the control of the aforementioned systems, since the mechanical components of the hitching mechanisms each have to display a comparatively high rigidity. The known measuring devices for measuring forces and/or moments between a towing vehicle and a trailer vehicle usually offer only a limited accuracy and/or only enable a measurement in one direction or in two of three directions in space.

A measuring device for measuring forces and/or moments between a motorized vehicle and a trailer or ancillary implement towed or pushed by said vehicle is known from DE 10 2018 106 855 A1. This measuring device is arranged in a coupling region between the motorized vehicle and the towed or pushed trailer or ancillary implement. Said device exhibits a cruciform carrier with four radially extending measuring arms, which is arranged at right angles to an imaginary longitudinal axis of the motorized vehicle, the carrier being clamped between a base plate and a standard coupling carrier. A total of four sensor elements - for instance, four strain gages serving as force sensors - are arranged on the four measuring arms of the carrier. The sensor elements are connected to an electronic evaluation unit which, by means of known algorithms, can calculate forces and torques acting on the measuring device in terms of magnitude and direction from the signals of the sensor elements, and also forward them to a driving-condition management system.

A disadvantageous aspect of this measuring device is that strains in respect of the measuring arms of the carrier can in each instance be measured only in one measuring direction, namely in the direction in which the strain gage is oriented. As a result, as a rule only a part of the actual strain of a measuring arm can be measured, as a result of which the accuracy of the measuring device is not optimal.

DE 25 20 673 C3 presents and describes a measuring device for measuring force components and torque components acting on a steering knuckle of a wheel suspension. This measuring device exhibits a square flange plate which bears an axle journal in its center and is firmly connected to a steering-knuckle carrier via regions of deformation. Strain-gage rosettes are fitted to the points of weakness, constituted by grooves and bores, of the regions of deformation, said rosettes being arranged in distributed manner on both sides of the plate and also on the edges of the flange plate. The rosettes each consist of two strips overlapping one another at an angle of 90°, the orientation of the strips predetermining a measuring direction in each instance. The strain-gage rosettes are electrically interconnected by means of five bridge circuits in such a manner that three bridge circuits for the force components acting on the axle journal in the three mutually perpendicular principal directions - that is to say, in two principal directions in the plane of the flange plate and also in a third principal direction in the direction of the axis of the axle journal - and also the two remaining bridge circuits for the tilting moments on the axle journal about the two principal directions of the flange plate each generate an electrical signal, so that a total of three individual force components and two individual tilting-moment components can be measured.

A disadvantageous aspect of this measuring device is that the flange plate requires numerous mutually aligned grooves, slots and bores. The strain-gage rosettes have only two measuring directions. The number of strain-gage rosettes required is therefore large. In addition, numerous strain-gage rosettes are arranged both on the front and rear sides and on the plate edges. The manufacture of the flange plate, the cabling of the strain-gage rosettes and also the installation are correspondingly elaborate, and the manufacturing costs are relatively high. The known measuring device is therefore more suitable for investigations relating to the wheel suspension and steering on test rigs or in respect of specially equipped motor vehicles for these purposes, but less suitable for use in respect of production vehicles.

Against this background, the object underlying the invention is to propose an improved measuring device of the stated type that displays a sensitive response characteristic and also a high accuracy of measurement and that is nevertheless capable of being manufactured easily and inexpensively.

This object is achieved with a measuring device that exhibits the features of claim 1. Advantageous configurations and further developments of this measuring device are defined in the dependent claims.

The measuring device according to the invention for measuring forces and/or moments between a towing vehicle and a trailer vehicle of a vehicle combination accordingly exhibits the following:

A carrier taking the form of a measuring cross, with several measuring arms, which is capable of being arranged on and connected to a hitching mechanism for coupling the towing vehicle with the trailer vehicle. A sensor unit senses a force-induced and/or moment-induced deformation of each of the measuring arms. An electronic measured-data acquisition and evaluation unit is electrically connected or capable of being connected to the sensor unit and is designed to acquire and evaluate electrical signals of the sensor unit in all three directions in space, brought about by force-induced and/or moment-induced deformations of the hitching mechanism. The temperature compensation module is designed to reduce a temperature induced measurement error of the measuring device.

In one embodiment, the sensor unit is formed by a strain-gage rosette that is arranged on each measuring arm of the carrier, said rosettes each consisting of at least three strain gages effective as force sensors and arranged at an angle relative to one another. In addition, an electronic measured-data acquisition and evaluation unit is present which is electrically connected or capable of being connected to the strain-gage rosettes. This measured-data acquisition and evaluation unit is designed to acquire and evaluate electrical sensor signals in all three directions in space, brought about by force-induced and/or moment-induced deformations of the hitching mechanism and correlated with changes in strain of the strain-gage rosettes. For this purpose, the measured-data acquisition and evaluation unit exhibits an electronic circuit and/or a computer program with an algorithm, by means of which the coupling forces, coupling moments and/or components thereof acting on the hitching mechanism are capable of being determined in terms of magnitude and direction and also in time-resolved manner and are also capable of being made available to other vehicle systems.

In one embodiment, the temperature compensation module comprises a temperature sensor, which is arranged to sense the temperature of the carrier. The temperature compensation module may be formed by a part of the electronic measured-data acquisition and evaluation unit or may be an additional electronic data processing unit. The temperature compensation module determines a change in strain on the carrier caused by a change of the temperature of the carrier. A temperature sensor may be arranged to sense the temperature of the carrier and the electronic measured-data acquisition and evaluation unit is designed to determine a change in strain on the carrier caused by a change of the temperature of the carrier. The electronic measured-data acquisition and evaluation unit is also arranged to compensate the sensed strain of the carrier by the determined temperature caused change in strain.

In one embodiment, a temperature compensating strain-gage rosette corresponding to each strain-gage rosette is located at a strain-passive portion of the carrier. For each of the strain-gage rosettes two resistors may be electrically connected to the strain-gage rosette and one of the temperature compensating strain-gage rosettes form a bridge circuit.

By virtue of this arrangement, a measuring device is realized that enables the ascertainment of coupling forces and coupling moments in respect of a hitching mechanism in all three directions in space and thereby achieves a high precession and also a high temporal resolution with a sensitive response characteristic. The basis for this was the recognition that the use of strain-gage rosettes in combination with a mechanical structural design in the form of a measuring cross with several measuring arms enables a very accurate measurement of coupling forces in all three dimensions in space and a compensation of temperature induced measurement errors.

The precise measured values, temporally highly resolved by means of the measuring device, of the coupling forces and coupling torques can be utilized advantageously in a multiplicity of applications in the control of the drive dynamics of a vehicle combination and also for controlling driver-assistance systems, such as, for instance, in connection with the adjustment of the braking force of an electronic braking system, for preventing trailer vibrations, for timely straightening of a vehicle pairing, and/or for preventing coupling overloads.

Accordingly, the measuring device consists of a mechanical component and an electronic component. The mechanical component is a multi-arm cruciform carrier. The electronic component is an arrangement of several strain-gage rosettes which is electrically connected to a measured-data acquisition and evaluation unit.

In order to ascertain the three-dimensional forces and moments acting on the hitching mechanism, the cruciform carrier, consisting substantially of several measuring arms, is firmly mounted on the trailer coupling. If the measuring cross is frictionally connected to the hitching mechanism, the measuring arms react with longitudinal and/or torsional strains to the reversible deformations of the trailer coupling that are brought about by mechanical stresses during the driving or maneuvering of the vehicle combination.

As mentioned, a strain-gage rosette is arranged on each measuring arm. The longitudinal and/or torsional strains of the measuring arms are transmitted to the strain-gage rosettes. A single strain gage could acquire only one electrical signal corresponding to a strain of the measuring arm in a principal strain-measuring direction. As a result, only a one-dimensional projection - that is to say, merely a part of the actual strain of the measuring arm in question - could be measured.

A strain-gage rosette with three strain gages arranged at an angle relative to one another, on the other hand, generates several electrical signals and enables a reconstruction of the actual three-dimensional strain of the respective measuring arm, and consequently the measurement of forces and moments in all directions.

The deformation of the hitching mechanism may act variably on the measuring arms of the measuring cross, so that the measuring arms undergo measurable differences in strain and the strain-gage rosettes undergo variable strains. From the electrical signals of the strains and from the differences in strain of the individual measuring arms, the actual forces and moments that are acting on the hitching mechanism can be inferred in terms of magnitude and direction after a preceding calibration of the measuring device, taking into consideration the strength indices of the material of the measuring cross - that is to say, the modulus of elasticity and the lateral-strain ratio (Poisson's ratio).

For the evaluation of the electrical signals from the changes in strain of the strain-gage rosettes, the measuring device can draw upon known mathematical methods. For this purpose, the strain-gage rosettes are suitably electrically interconnected, in order to obtain direction-dependent and magnitude-dependent separate electrical signals from the strain-induced changes in electrical resistance of the individual strain gages as input variables for the calculation of the desired force components.

The mechanical stress condition of a body - in the present case, of a measuring arm - can be described and illustrated completely by means of the graphical method of Mohr circles of stress. In "Hering et al., Physik für Ingenieure, 19th edn., Springer 2012, chapter 2.11, Mechanik deformierbarer fester Körper" the derivation of the principal stresses and also of the angular separations of the principal axes by means of the construction of Mohr circles of stress is illustrated on the basis of an example of a triaxial tensile stress of a body. In "Dubbel, Taschenbuch für den Maschinenbau, 19th edn., 1997, chapter C1.1 Spannungen und Verformungen" the mathematical formalism of Mohr circles of stress is described for one-dimensional, two-dimensional and for three-dimensional stress conditions of bodies.

A precise reconstruction of the amplitude and direction of forces and moments acting on the hitching mechanism can accordingly be undertaken in accordance with the principle of vector addition of the strain-measurement signals of the individual subsidiary strain gages of the strain-gage rosettes. Algorithms and electronic circuits for evaluating strains of strain-gage rosettes are already known. For instance, reference is made in this regard to DE 16 48 385 A, in which a strain-gage-rosette computer is described for a strain-gage rosette consisting of three strain gages arranged at an angle relative to one another. A measuring cross with several strain-gage rosettes on several measuring arms according to the invention is capable of being evaluated by these means, in order to obtain the desired vectorial information about the coupling forces and coupling moments at the hitching mechanism.

According to a preferred further development of the invention, there may be provision that the carrier exhibits four measuring arms extending radially from a central carrier part, each of the measuring arms being arranged offset by 60° relative to an immediately adjacent first measuring arm and also by 120° relative to an immediately adjacent second measuring arm, a strain-gage rosette consisting of three strain gages being arranged respectively on each measuring arm in the region of its free end remote from the central carrier part, and a central strain gage of each strain-gage rosette being oriented respectively in the direction of an imaginary geometrical longitudinal axis of the measuring arm, and the two strain gages adjacent to the central strain gage being arranged angled by 45° in each instance to the left and to the right.

Surprisingly, this combination of a measuring cross with strain-gage rosettes has proved to be a particularly sensitive measuring tool with which even extremely small coupling forces are capable of being measured in all three dimensions in space. In this connection, three strain gages arranged on a flat surface of a measuring arm in each instance establish an angle of 90 degrees. By means of this strain-gage rosette, strains and torsions of the measuring arm with unknown principal direction can be measured. A resultant strain angle of the measuring arm can be determined from the measured signals. From the actual strain angle of each of the four measuring arms and from the strain-angle differences on the individual measuring arms, the forces and moments acting on the hitching mechanism in all three directions in space can be reconstructed.

According to one embodiment of the invention, there may be provision that the carrier takes the form of a three-dimensionally effective coupling-force measuring adapter of a mouth-type coupling between a towing vehicle and a drawbar trailer or center-axle trailer of a load train, this carrier being clamped to the towing vehicle between the mouth-type coupling and a hitching lug, and this carrier being arranged oriented at right angles to an imaginary geometrical longitudinal axis of the vehicle combination.

A similar arrangement of a measuring device is already known from the aforementioned DE 10 2018 106 855 A1 and is described in detail therein. In contrast to the known arrangement, the measuring arms of the cruciform carrier according to the invention exhibit several strain-gage rosettes instead of individual sensor elements, by virtue of which a complete three-dimensional acquisition of forces and moments on the hitching mechanism can be undertaken. As a result, a higher accuracy and also a greater measuring sensitivity are obtained.

According to another embodiment of the invention, there may be provision that the carrier takes the form of a three-dimensionally effective coupling-force measuring adapter of a fifth-wheel coupling between a truck tractor and a semitrailer of a tractor-trailer train, the carrier being clamped to the truck tractor between the fifth-wheel coupling and a chassis, and the carrier being arranged oriented in the direction of an imaginary geometrical longitudinal axis of the tractor-trailer train.

By virtue of this arrangement, the coupling force at a coupling-point between the truck tractor and the semitrailer can be measured precisely. Accordingly, the cruciform carrier can be mounted below a fifth-wheel coupling and replaces a mounting plate ordinarily used there.

In addition, there may be provision that the measuring device exhibits an interface for a transmission of data to a display unit and/or for a tapping of data by a drive-dynamics control system and/or a driver-assistance system. The ascertained coupling forces and coupling moments can, for instance, be represented numerically and/or graphically on a display instrument in the driver's cab.

By means of this interface, the coupling-force information ascertained with the measuring device can be tapped as input variables at any time by existing drive-dynamics systems and driver-assistance systems of the vehicle combination, and advantageously fed into the control systems. For instance, the data may be available in a data-processing bus system (for instance, a CAN bus) connected to the interface. Possible applications in which the measured coupling-force information can be utilized are:
- influencing, in particular reducing, the coupling force in the course of braking operations,
- control information for electrically driven motorized trailers (e-trailers),
- detecting a risk of tipping,
- detecting trailer vibrations,
- determining the center of gravity of the vehicle combination,
- collision early warning,
- straightening a buckling towing-vehicle/trailer combination,
- detecting kingpin wear, and also
- detecting a hitching mechanism that is only partially closed.

According to one embodiment the measuring arms extend radially from a central carrier part to form on the far side of the central carrier part a first installation interface towards the towing vehicle and wherein the central carrier part forms a second installation interface towards the trailer vehicle, wherein the carrier is formed as a monolithic structure including the central carrier part, the first installation interface and the second installation interface. The monolithic structure is easy to manufacture and provides high resistance against rough operating conditions.

According to one embodiment the carrier is a single casted piece of material and/or machined from a single piece of material. For example the complete measuring device including all mechanical structures and excluding the electronic components and, as far as applicable a cover, may be formed from or casted as a single aluminum block.

According to one embodiment the carrier and/or the measurement arms extend from the central carrier part towards the installation interface such that a free space between the installation interface and the central carrier part. Within the space or volume defined by the arms and the carrier a protected space is provided due to the rigidity structure of the carrier and the arms. In the protected space, electronic components are located to remain unaffected from an impact on the measuring device.

According to one embodiment the electronic measured-data acquisition and evaluation unit is arranged within the free space and/or that the free space is axially and/or radially bridged by rigid portions of the carrier and/or the measuring arms.

According to one embodiment the electronic measured-data acquisition and evaluation unit is arranged within a housing defined by the central carrier part and a housing cover. The housing cover may have a dome shape. A sealing may be provided between the housing cover and the central carrier part to ensure fluid tightness of the housing.

According to one embodiment the carrier is designed such that the central carrier part defines cavity in which the electronic measured-data acquisition and evaluation unit is located, wherein in particular the cavity forms part of a housing. By this means a protected space for electronic components at minimum space requirements is achieved.

Finally, the invention also relates to a vehicle combination - for instance, a tractor-trailer train, load train or passenger-car/caravan combination - with a measuring device for measuring forces and/or moments between a towing vehicle and a trailer vehicle, said measuring device having been constructed in accordance with the features according to the invention that have just been described.

The invention will be elucidated in more detail below with reference to embodiment examples represented in the appended drawing. Shown in this drawing are:
Fig. 1 a perspective front view of a carrier of a measuring device according to a first embodiment of the invention,
Fig. 2 a rear view of the carrier according to fig. 1 with an arrangement of strain-gage rosettes,
Fig. 3 an enlarged detailed view of the carrier according to fig. 2,
Fig. 3a an enlarged detailed view of a strain-gage rosette,
Fig. 4 a schematically greatly simplified sectional representation of the carrier in the installed state on a hitching mechanism with a mouth-type coupling,
Fig. 5 a perspective view of a carrier of a measuring device according to a second embodiment of the invention,
Fig. 6 a schematically greatly simplified sectional representation of the carrier similar to that of fig. 5 in the installed state on a hitching mechanism with a fifth-wheel coupling
Fig. 7 a perspective front view of a carrier of a measuring device according to a third embodiment of the invention,
Fig 8 a rear view of the carrier according to fig. 7,
Fig. 9 a perspective view of the carrier of fig. 7 from a different angle of view,
Fig. 10 a rear view of a carrier of a measuring device according to a fourth embodiment of the invention,
Fig. 11 a perspective view on a carrier of a measuring device according to a fifth embodiment of the invention without cover,
Fig 12 a perspective view of the carrier according to fig. 11 with a cover mounted on the rear side from a different angle of view,
Fig.13 a schematically greatly simplified representation of a measuring device according to a sixth embodiment in the installed state between a towing vehicle and a coupling device.

Some structural elements in the figures tally, so they have been denoted by the same reference numerals.

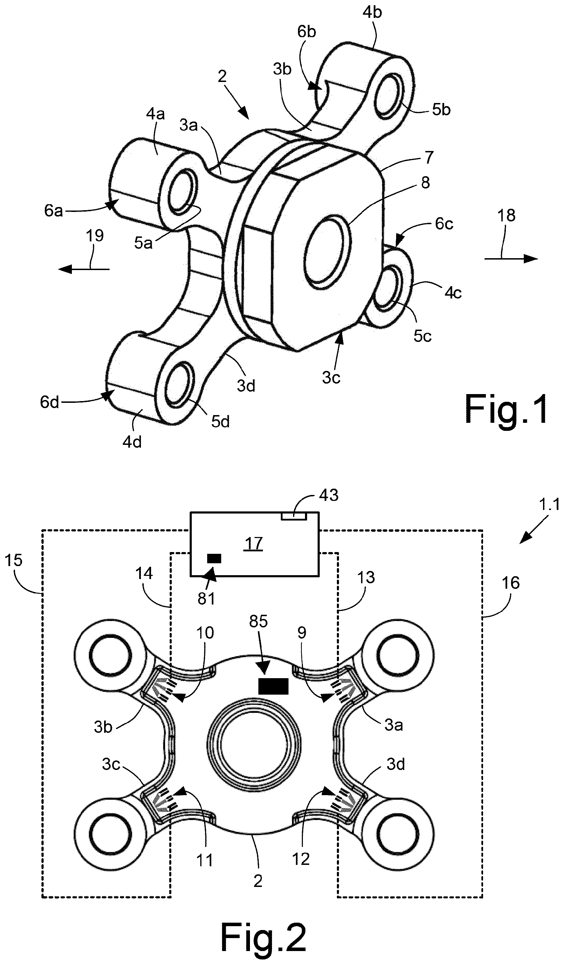

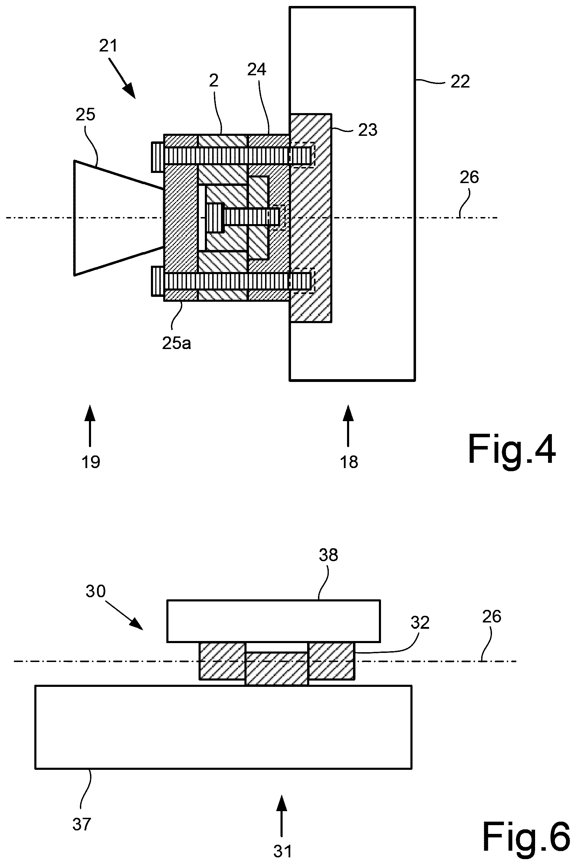

Fig. 1 accordingly shows a front side, facing toward a towing vehicle, of a carrier 2 of a measuring device 1.1 according to the invention for measuring coupling forces and coupling moments on a hitching mechanism 21 (fig. 4) which serves for separably connecting a towing vehicle 18 to a drawbar trailer 19 of a load train. The carrier 2 has the form of a measuring cross with measuring arms 3a, 3b, 3c, 3d arranged offset with a separation from one another, two by 60° and two by 120°. Eyes 4a, 4b, 4c, 4d with through-bores 5a, 5b, 5c, 5d are formed at the respective free end of these measuring arms, the eyes 4a, 4b, 4c, 4d each having an axial projection 6a, 6b, 6c, 6d. The carrier 2 is provided with a central carrier part 7 taking the form of a hub projecting axially on one side, which is substantially cylindrical but exhibits flattened edges. A central threaded bore 8 is formed in the carrier part 7.

The carrier 2 including the central carrier part 7 is designed as monolithic structure that forms a single piece as far as installation, handling and in particular structural integrity is concerned. While the monolithic structure may be formed by a process that involves structurally unifying several components, e.g. a process to form a fibre-reinforced plastic part or welded structure made of several parts, as a result the structure formed by such a process should be understood as monolithic structure. The carrier 2 may also be manufactured from a single body of material. For example, the carrier 2 may be manufactured, e.g. machined from a single metal body. The carrier 2 may also be a single casted part. The carrier 2 comprises a temperature sensor 85, which is connected to a temperature compensation module. The temperature compensation module may comprise as shown in Fig. 2 a specific electronic components 81 or may be realized using the electronic components of an electronic measured-data acquisition and evaluation unit 17.

In particular the carrier 2 including the central carrier part 7 is built as or made from a single piece of aluminum. The carrier 2 including the central carrier part 7 is formed as a single piece in such a way that it transmits forces applied by fasteners engaging with the eyes 4a, 4b, 4c, 4d to a fastener engaging with the central threaded bore 8 via its structure without transmitting forces through any intermediate parts.

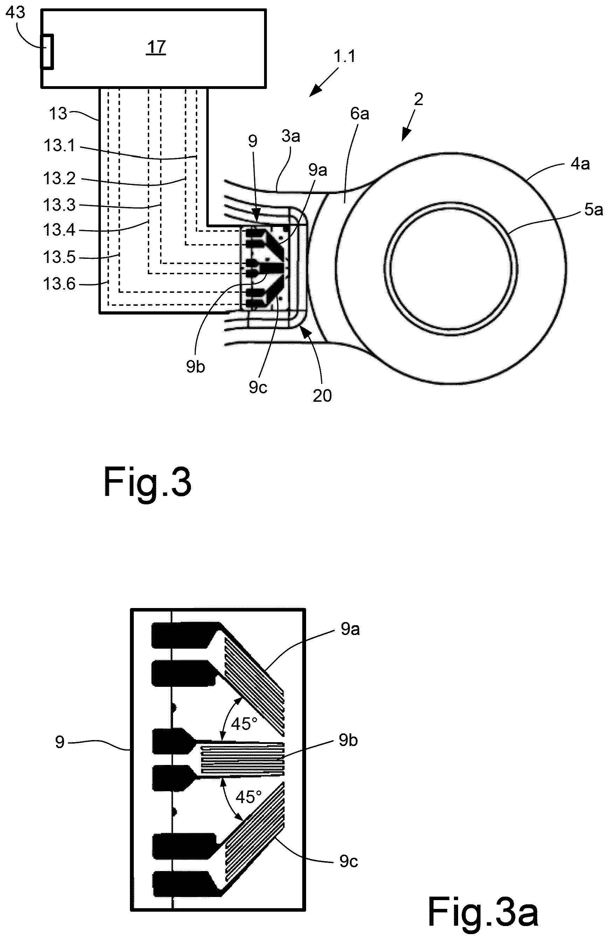

Fig. 2 shows the rear side of the carrier 2 facing toward the drawbar trailer 19. A strain-gage rosette 9, 10, 11, 12 is arranged respectively on each measuring arm 3a, 3b, 3c, 3d. In the region of the central carrier part 7 and beyond this as far as the eyes 4a, 4b 4c, 4d of the free ends of the measuring arms 3a, 3b, 3c, 3d the rear side of the carrier 2 is provided with a recess 20 (fig. 3), in which the respective strain-gage rosette 9, 10, 11, 12 is arranged as close as possible to the eyes 4a, 4b 4c, 4d and is also firmly connected, for instance by adhesive closure, to the carrier material. The respective strain-gage rosettes 9, 10, 11, 12 are connected to an electronic measured-data acquisition and evaluation unit 17 via, respectively, a six-core electrical cable 13, 14, 15, 16. The measured-data acquisition and evaluation unit 17 exhibits electronic computing means and storage means known as such, by means of which the electrical signals, which are correlated with strains or with changes in strain of the strain-gage rosettes 9, 10, 11, 12, can be evaluated, in order to ascertain forces and moments to which the hitching mechanism 21 is subjected. In addition, the measured-data acquisition and evaluation unit 17 exhibits an electrical or optical interface 43 for a transmission of data to a display unit and/or for a tapping of data by a drive-dynamics control system and/or a driver-assistance system.

Fig. 3 and fig. 3a show, in exemplary manner, such a strain-gage rosette 9 arranged on a measuring arm 3a, and also individually in detail. Accordingly, a strain-gage rosette 9 consists of a central strain gage 9b and also of two further strain gages 9a, 9c which are arranged on the right and on the left, respectively, at an angle of 45° with respect to the central strain gage 9b. The three strain gages 9a, 9b, 9c are connected to the measured-data acquisition and evaluation unit 17 via, respectively, two electrical cores 13.1, 13.2, 13.3, 13.3, 13.4, 13.5, 13.6 of an electrical cable 13. The remaining three strain-gage rosettes 10, 11, 12 are of identical construction to strain-gage rosette 9 just described and are likewise connected to the measured-data acquisition and evaluation unit 17.

Fig. 4 shows schematically the carrier 2 just described in the installed state on the hitching mechanism 21. The hitching mechanism 21 exhibits a box-shaped standard hitching lug 22, a standard coupling carrier 23 with locking means for fixing to the hitching lug 22, a connecting plate 24, and also a mouth-type coupling 25 with a base plate 25a. The carrier 2 is oriented at right angles to an imaginary geometrical longitudinal axis 26 of the vehicle combination. In the aforementioned DE 10 2018 106 855 A1 a similar standard hitching lug 22 and also a similar standard coupling carrier 23 are described, so these need not be elucidated any further here. What is important is merely that the cruciform carrier 2 is clamped between the hitching lug 22 and the mouth-type coupling 25 for the purpose of performing its measuring tasks.

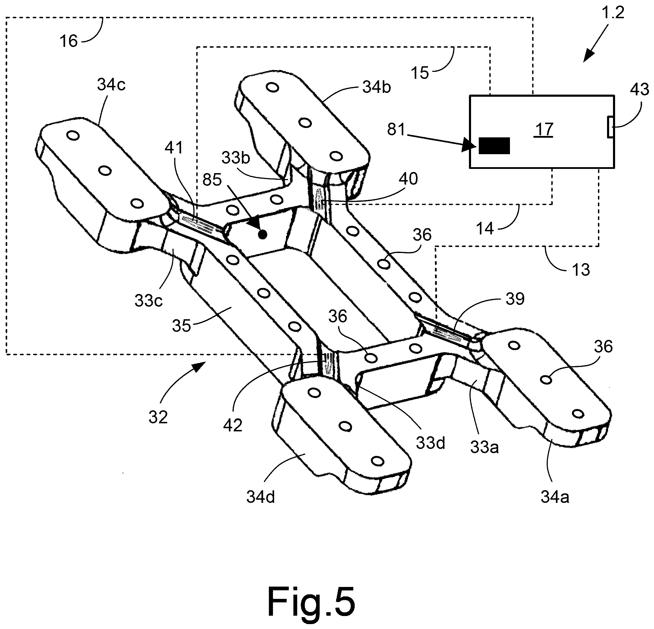

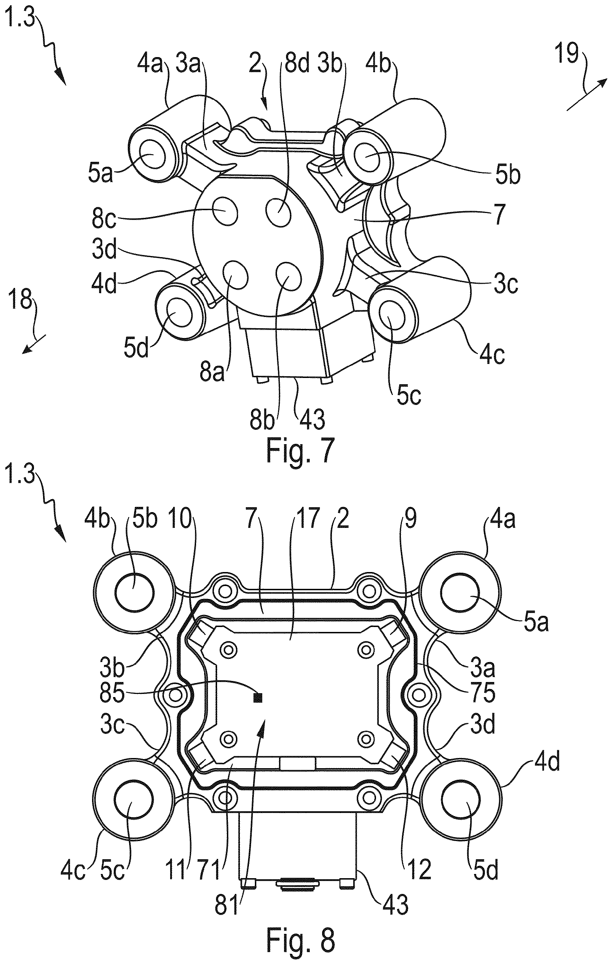

Fig. 5 shows a second embodiment of a measuring device 1.2 for measuring coupling forces and coupling moments on a hitching mechanism 30 (fig. 6) of a truck tractor 31 of a tractor-trailer train. Accordingly, a second measuring-cross-shaped carrier 32 exhibits measuring arms 33a, 33b, 33c, 33d arranged offset with a separation from one another, two by 60° and two by 120°, at the free end of each of which a rectangular finger 34a, 34b, 34c, 34d is formed. While the temperature sensor 85 has been shown only in Figs. 2 and 5 so far, the skilled person will understand that the temperature compensation module as described in more detail with respect to Figs. 7 to 12 may be applied correspondingly in all shown embodiments using the same principles of the invention. Monitoring of temperature differences of the carrier is used to determine a temperature induced strain change via a temperature compensation module. The sensed strain is corrected by the temperature induced deviation to enable more accurate measurements of strain, force and moment on a vehicle coupling.

This second carrier 32 is provided with a central carrier part 35 taking the form of a frame projecting axially in the direction toward the chassis 37 (fig. 6) and retracted in the direction toward the fifth-wheel coupling 38. A strain-gage rosette 39, 40, 41, 42 is arranged on and fastened to each measuring arm 33a, 33b, 33c, 33d. As in the first embodiment example, the strain-gage rosettes 39, 40, 41, 42 are connected to the electronic measured-data acquisition and evaluation unit 17 via electrical cables 13, 14, 15, 16.

Numerous through-bores 36 for screw fastening to the fifth-wheel coupling 38 and to the chassis 37 are formed in the central carrier part 35, taking the form of a frame, of this second carrier 32, and also in the fingers 34a, 34b 34c, 34d of the measuring arms 33a, 33b, 33c, 33d. Fig. 6 shows schematically, in greatly simplified manner, this second carrier 32 in the installed state on the hitching mechanism 30 of the tractor-trailer train.

Fig. 7 shows another embodiment of a measuring device 1.3 with essentially identical characteristics and operation as the measuring device 1.2 with a few exceptions explained in the following: The central carrier part 7 comprises four bores 8a, 8b, 8c, 8d by which the carrier 2 can be mounted directly to an installation device on a towing vehicle. The four bourse 8a, 8b, 8c, 8d form a mechanical interface by which the carrier 2

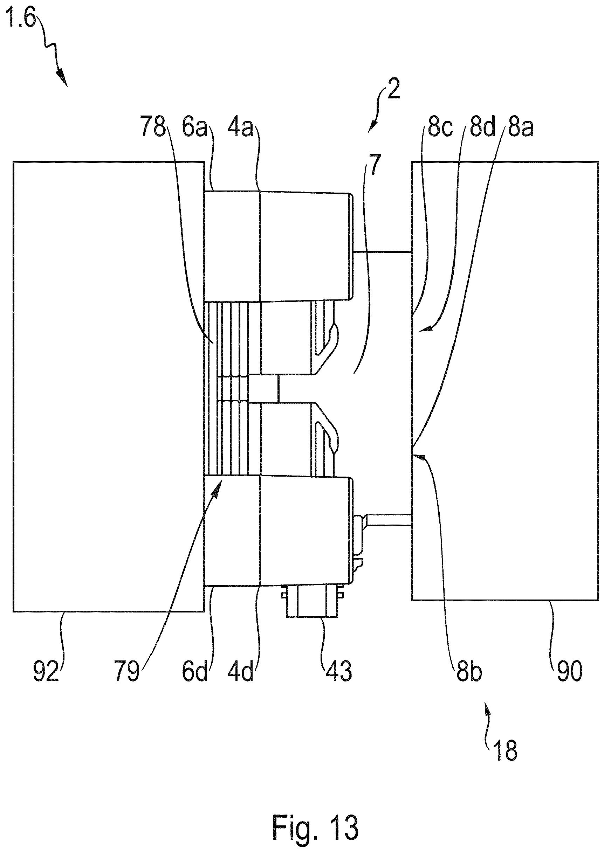

The four bores 8a, 8b, 8c, 8d form a first mechanical installation interface by which the carrier 2 can be mounted on a towing vehicle 18. Towing vehicles in the field of agricultural machines usually have an installation device according to a predefined industry standard. The bores 8a, 8b, 8c, 8d are dimensioned and arranged on the carrier 2 such that they fit at least one specific predetermined industry standard without requirement any adaptation device between the bores 8a, 8b, 8c, 8d and the installation device on the towing vehicle 18. A well-known installation device on agricultural towing vehicles is a height adjustable slider plate, which comprises multiple bores in a pattern according to an industry standard. The bores 8a, 8b, 8c, 8d are arranged and dimensioned to match a set of the multiple bores according to the industry standard of a slider plate on an agricultural towing vehicle, like a tractor. In particular the bores are dimensioned to allow fastening to the slider plate by fasteners of the type metric M20 as per ISO standard 1502. By this standardized interface the carrier 2 is easily mountable on any vehicle 18 comprising a slider plate according to the above-mentioned industry standard, or a corresponding installation device. Installation to an installation device is as schematically shown in Fig.13 is explained in more detail with reference to Fig. 13 further below.

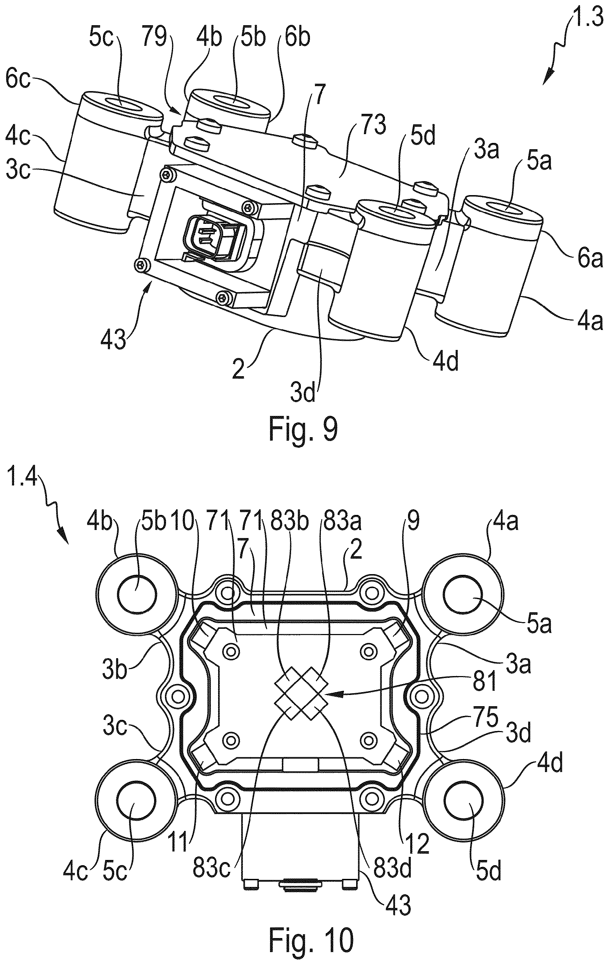

As shown in the rear view on the measuring device 1.3 of Fig. 8, the central carrier part 7 forms a cavity 71. A cover plate 73 (only shown in Fig. 9) can be mounted on top of the cavity 71 to form a protective enclosure for electronic components of the measuring device 1.3. For example, the electronic measured-data acquisition and evaluation unit 17 and the strain-gage rosettes 9, 10, 11, 12 are arranged within the cavity 71 for protection. A sealing 75, which may comprise an elastomeric material, encompasses the cavity 71 and is arranged such between the cavity defining parts of the carrier 7 and the cover plate 73, once mounted, that a fluid tight enclosure or housing is formed. The electronic measured-data acquisition and evaluation unit 17 is at least partially arranged on a printed circuit-board (PCB) located in the cavity 71 formed by the carrier 2. The measuring device 1.3 also comprises a temperature compensation module with a temperature sensor 85. The temperature sensor 85 is in this embodiment mounted on the PCB but may be located in other embodiments at any suitable location on the carrier 2, 32 to sense the temperature of the carrier 2, 32, i.e. the structural body of the carrier 2, 32 or the ambient temperature. In case the ambient temperature is sensed, the electronic measured-data acquisition and evaluation unit 17 may be arranged to determine a temperature more specific to the carrier 2, 32 based on the ambient temperature.

Fig. 9 shows the measuring device 1.3 of Figs. 7 and 8 with the cover plate 73 mounted. The cover plate 73 is made from a rigid material and/or has impact-energy absorbing characteristics. The cover plate 73 may be made from plastics, a composite or metal.

Fig. 10 shows a further exemplary measuring device 1.4, which differs from the measuring device 1.3 only in that it the temperature compensation module comprises four temperature compensating strain-gage rosettes 83a, 83b, 83c, 83d. The temperature compensating strain-gage rosettes 83a, 83b, 83c, 83d are of the identical make like the strain-gage rosettes 9, 10, 11, 12 and located in an area of the carrier 2, 32 that is exposed to reduced, preferably to no or a neglectable strain compared to the where the strain-gage rosettes 9, 10, 11, 12 are located. The temperature compensating strain-gage rosettes 83a, 83b, 83c, 83d may be located on a PCB, particularly in a strain decoupled area on the PCB. To that end the PCB may comprise slits or cut-outs to further reduce strain in specific areas of the PCB.

Thus the temperature compensating strain-gage rosettes 83a, 83b, 83c, 83d do not experience strain due to deformation of the carrier 2, 32 but only based on a change of temperature.

The temperature compensation module comprises at least two further ohmic resistors (not shown). In one embodiment (not shown in detail), each of the strain-gage rosettes 9, 10, 11, 12 is hard-wired to two resistors and one of the temperature compensating strain-gage rosettes 83a, 83b, 83c, 83d such that a bridge circuit is formed. Thus, a temperature induced strain is compensated.

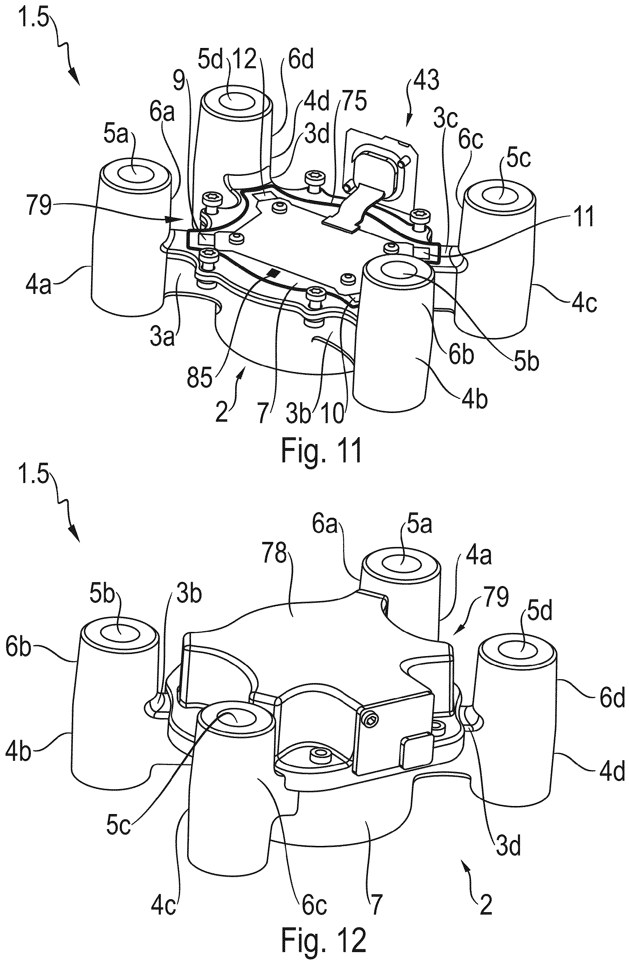

In another embodiment (not shown in detail), the temperature compensation module comprises in particular exactly two further resistors which are selectively connected to a pair of a strain-gage rosette 9, 10, 11, 12 and a temperature compensating strain-gage rosette 83a, 83b, 83c, 83d to form a bridge circuit at least for a predetermined time to acquire temperature compensation data by the electronic measured-data acquisition and evaluation unit 17. It should be understood that the temperature compensation module as per Fig. 10 may additionally comprise a temperature sensor 85 as per the embodiments of Figs. 8 and 11, to provide additional information on temperature induced strain on the carrier 2, 32. The electronic measured-data acquisition and evaluation unit 17 is arranged to evaluate a change in strain indicated by the temperature sensor 85 and the temperature compensated strain measurements from at least one bridge circuit to provide a high quality signal on strain and ultimately an improved information on coupling forces, coupling moments and/or the respective directional components.

Fig. 11 shows a measuring device 1.5 which differs from the measuring device 1.3 or 1.1 only in that the impact safety concept for components arranged on the central carrier part 7, 35, like a strain-gage rosette 9, 10, 11, 12; 39, 40, 41, 42 or other electronic components, e.g. the electronic measured-data acquisition and evaluation unit 17 is changed. The axial projections 6a, 6b, 6c, 6d of the measurement arms 3a, 3b, 3c, 3d are more pronounced to provide a larger free space between an installation interface, formed by the planar end-faces of the eyes 4a, 4b, 4c, 4d facing away from the central carrier part 7, and the central carrier part 7. In Fig. 11, the free space is partially occupied by the strain-gage rosettes 9, 10, 11, 12, a temperature sensor 85 and a PCB. defined between the central carrier part 7 and the interface for transmission of data 43.

Fig. 12 shows the measuring device 1.5 also shown in Fig. 11. A cover 78 is mounted on top of the carrier 2 to form a protective housing for the strain-gage rosettes 9, 10, 11, 12 and other electric components, like the PCB or the temperature sensor 85. Sealing 75 engages with the cover 78 and the carrier to seal the housing in a fluid tight manner. The cover 78 is dome shaped and may be made of an impact resisting rigid polymeric material or metal. For example the dome-shaped cover 78 may be a plastic cover, a casted aluminum cover or a cover made from a stamped metal sheet material. The cover 78 occupies the free space 79 delimited by the end-faces of the eyes 4a, 4b, 4c, 4d of the measuring arms 3a, 3b, 3c, 3d on the installation side and by the central carrier part 7 on the side of the measuring device 1.5.

Fig 13 shows schematically a measuring device 1.6 mounted between a mounting device 90 of towing vehicle 18 and a coupling device 92 to which a trailer vehicle may be connected. The coupling device 92 may be a portion of a hitching mechanism or a hitching lug or an agricultural work equipment. The mounting device 90 may be a height-adjustable slider plate as used as an industry standard mounting device within the field of agricultural towing vehicles. The measuring device 1.6 may be designed to be functionally and structurally identical to the previously described measuring devices 1.1, 1.3, 1.4 or 1.5 or any combination thereof. The only structural specific of the measuring 1.6 as shown in Fig. 13 is that the axial projections 6a, 6b, 6c, 6d of the measurement arms 3a, 3b, 3c, 3d are reduced in their axial dimension so that the free space 79 is smaller compared to the measuring device 1.5. The cover 78 which occupies the free space between the carrier 2, i.e. the central carrier part 7, and a first installation interface of the measuring device 1.6 as defined by the axial ends of the eyes of the measurement arms 3a, 3b, 3c, 3d, at which the coupling device 92 is fastened. A second installation interface is formed by bores 8a, 8b, 8c, 8d in the carrier 2. The bores 8a, 8b, 8c, 8d are dimensioned and arranged in a pattern that matches a corresponding pattern on the mounting device 90 of the towing vehicle 18, without any intermediary adapting pieces.

While the invention has been described with reference to some embodiments, it will be understood by those skilled in the art that various changes may be made, and equivalents may be substituted for elements thereof without departing from the scope of the invention. In addition, many modifications may be made to adapt a particular situation or material to the teachings of the invention without departing from essential scope thereof. Therefore, it is intended that the invention not be limited to the particular embodiments disclosed as the best mode contemplated for carrying out this invention, but that the invention will include all embodiments falling within the scope of the claims.

### List of Reference Symbols (Part of the Description)

- 1.1: Measuring device (1 st embodiment)
- 1.2: Measuring device (2nd embodiment)
- 1.3: Measuring device (3rd embodiment)
- 1.4: Measuring device (4th embodiment)
- 1.5: Measuring device (5th embodiment)
- 1.6: Measuring device (6th embodiment)
- 2: Carrier, measuring cross (1st embodiment)
- 3a: First measuring arm of the carrier 2
- 3b: Second measuring arm of the carrier 2
- 3c: Third measuring arm of the carrier 2
- 3d: Fourth measuring arm of the carrier 2
- 4a: Eye on the first measuring arm 3a
- 4b: Eye on the second measuring arm 3b
- 4c: Eye on the third measuring arm 3c
- 4d: Eye on the fourth measuring arm 3c
- 5a: Through-bore on the eye of the first measuring arm 3a
- 5b: Through-bore on the eye of the second measuring arm 3b
- 5c: Through-bore on the eye of the third measuring arm 3c
- 5d: Through-bore on the eye, fourth measuring arm 3d
- 6a: Axial projection of the eye on the first measuring arm 3a
- 6b: Axial projection of the eye on the second measuring arm 3b
- 6c: Axial projection of the eye on the third measuring arm 3c
- 6d: Axial projection of the eye on the fourth measuring arm 3d
- 7: Central carrier part of the carrier 2, hub
- 8: Central threaded bore of the carrier part 7
- 8a - 8d: Bores
- 9: First strain-gage rosette on the carrier 2
- 9a: First strain gage of the first strain-gage rosette 9
- 9b: Second strain gage of the first strain-gage rosette 9
- 9c: Third strain gage of the first strain-gage rosette 9
- 10: Second strain-gage rosette on the carrier 2
- 11: Third strain-gage rosette on the carrier 2
- 12: Fourth strain-gage rosette on the carrier 2
- 13: First electrical cable
- 13.1 - 13.6: Cores of the first electrical cable 13
- 14: Second electrical cable
- 15: Third electrical cable
- 16: Fourth electrical cable
- 17: Measured-data acquisition and evaluation unit
- 18: Towing vehicle (1st embodiment)
- 19: Trailer vehicle, drawbar trailer (1st embodiment)
- 20: Recess on the carrier (1st embodiment)
- 21: Hitching mechanism (1st embodiment)
- 22: Hitching lug (1st embodiment)
- 23: Standard coupling carrier (1st embodiment)
- 24: Connecting plate (1st embodiment)
- 25: Mouth-type coupling (1st embodiment)
- 25a: Base plate (1st embodiment)
- 26: Geometrical longitudinal axis of the vehicle combination
- 30: Hitching mechanism (2nd embodiment)
- 31: Towing vehicle, truck tractor (2nd embodiment)
- 32: Carrier, measuring cross (2nd embodiment)
- 33a: First measuring arm of the carrier 32
- 33b: Second measuring arm of the carrier 32
- 33c: Third measuring arm of the carrier 32
- 33d: Fourth measuring arm of the carrier 32
- 34a: Finger on the first measuring arm 33a
- 34b: Finger on the second measuring arm 33b
- 34c: Finger on the third measuring arm 33c
- 34d: Finger on the fourth measuring arm 33d
- 35: Central carrier part of the carrier 32, frame
- 36: Through-bores on the carrier 32
- 37: Chassis of the tractor-trailer train (2nd embodiment)
- 38: Fifth-wheel coupling
- 39: First strain-gage rosette on the carrier 32
- 40: Second strain-gage rosette on the carrier 32
- 41: Third strain-gage rosette on the carrier 32
- 42: Fourth strain-gage rosette on the carrier 32
- 43: Interface for a transmission of data
- 71: Cavity
- 73: Cover plate
- 75: Sealing
- 78: Cover
- 79: Free space
- 81: Electronic component
- 83a - 83d: Strain-gage rosettes
- 85: Temperature sensor
- 90: Installation device
- 92: Coupling device

## Claims

1. A measuring device (1.1, 1.2, 1.3, 1.4, 1.5, 1.6) for measuring forces and/or moments between a towing vehicle (18, 31) and a trailer vehicle (19) of a vehicle combination, with
- a carrier (2; 32) which exhibits several measuring arms (3a, 3b, 3c, 3d; 33a, 33b, 33c, 33d) and which is capable of being arranged on and connected to a hitching mechanism (21, 30) for coupling the towing vehicle (18, 31) with the trailer vehicle (19),
- a sensor unit sensing a force-induced and/or moment-induced deformation of each of the measuring arms (3a, 3b, 3c, 3d; 33a, 33b, 33c, 33d),
- an electronic measured-data acquisition and evaluation unit (17) which is electrically connected or capable of being connected to the sensor unit and which is designed to acquire and evaluate electrical signals of the sensor unit in all three directions in space, brought about by force-induced and/or moment-induced deformations of the hitching mechanism (21, 30), **characterized by** a temperature compensation module that reduces temperature induced measurement errors of the measuring device.

2. Measuring device (1.1, 1.2, 1.3, 1.4, 1.5, 1.6) as claimed in claim 1, **characterized in that** the sensor unit senses a strain of the carrier (2, 32) and the temperature compensation module comprises a temperature sensor (85) arranged to sense the temperature of the carrier (2, 32 and is designed to determine a change in strain on the carrier (2, 32) caused by a change of the temperature of the carrier (2, 32).

3. Measuring device (1.1, 1.2, 1.3, 1.4, 1.5, 1.6) according to claim 2, **characterized in that** the electronic measured-data acquisition and evaluation unit (17) is arranged to adjust an output of the measuring device (1.1, 1.2, 1.3, 1.4, 1.5, 1.6) to account for the temperature caused change in strain determined by the temperature compensation module.

4. Measuring device (1.1, 1.2, 1.3, 1.4, 1.5, 1.6) according to one of the claims 1 to 3, **characterized in that** the temperature compensation module comprises for each strain-gage rosette (9, 10, 11, 12; 39, 40, 41 ,42) a temperature compensating strain-gage rosette (83a, 83b, 83c, 83d) located at a strain-passive portion of the carrier (2, 32).

5. Measuring device (1.1, 1.2, 1.3, 1.4, 1.5, 1.6) according to claim 4, **characterized in that** the temperature compensation module comprises for each of the strain-gage rosettes (9, 10, 11, 12; 39, 40, 41 ,42) two resistors that are electrically connected to the strain-gage rosette (9, 10, 11, 12; 39, 40, 41 ,42) and one of the temperature compensating strain-gage rosettes (83a, 83b, 83c, 83d) to form a bridge circuit.

6. Measuring device (1.1, 1.2, 1.3, 1.4, 1.5, 1.6) according to claim 4, **characterized in that** the temperature compensation module comprises two resistors and that the electronic measured-data acquisition and evaluation unit (17) is arranged to control the temperature compensation module to selectively connect the two resistors to one of the strain-gage rosettes (9, 10, 11, 12; 39, 40, 41 ,42) and one of the temperature compensating strain-gage rosettes (83a, 83b, 83c, 83d) to form a bridge circuit.

7. Measuring device (1.1, 1.2, 1.3, 1.4, 1.5, 1.6) as claimed in one of claims 1 to 6, **characterized in that** the measuring arms (3a, 3b, 3c, 3d; 33a, 33b, 33c, 33d) extend radially from a central carrier part (7, 35) to form on the far side of the central carrier part (7,35) a first installation interface towards the towing vehicle and wherein the central carrier part (7, 35) forms a second installation interface towards the trailer vehicle, wherein the carrier (2, 32) is formed as a monolithic structure including the central carrier part (7,35), the first installation interface and the second installation interface.

8. Measuring device (1.1, 1.2, 1.3, 1.4, 1.5, 1.6) as claimed in one of claims 1 to 7, **characterized in that** the carrier (2, 32) is a single casted piece of material and / or machined from a single piece of material.

9. Measuring device (1.1, 1.2, 1.3, 1.4, 1.5, 1.6), as claimed in one of claims 1 to 8, **characterized in that** the carrier (2, 32) and/or the measurement arms (3a, 3b, 3c, 3d; 33a, 33b, 33c, 33d) extend in such away from a central carrier part (7,35) towards an installation interface on the trailer side that a free space between the installation interface and the central carrier part is formed.

10. Measuring device (1.1, 1.2, 1.3, 1.4, 1.5, 1.6), as claimed in claim 9, **characterized in that** the electronic measured-data acquisition and evaluation unit (17) is arranged within the free space and/or that the free space is axially and/or radially bridged by rigid portions of the carrier (7, 32) and/or by at least one measuring arm (3a, 3b, 3c, 3d; 33a, 33b, 33c, 33d).

11. Measuring device (1.1, 1.2, 1.3, 1.4, 1.5, 1.6), as claimed in one of claims 1 to 10, **characterized in that** the electronic measured-data acquisition and evaluation unit (17) is arranged within a housing defined by a central carrier part and a housing cover.

12. Measuring device (1.1, 1.2, 1.3, 1.4, 1.5, 1.6), as claimed in claim 11, **characterized in that** the housing cover has a dome shape and / or that a sealing is provided between the housing cover and the central carrier part (7, 35).

13. Measuring device (1.1, 1.2, 1.3, 1.4, 1.5, 1.6), as claimed in one of claims 1 to 12, **characterized in that** the carrier (2, 32) is designed such that a central carrier part (7) defines a cavity in which the electronic measured-data acquisition and evaluation unit (17) is located, wherein in particular the cavity forms part of a housing.

14. A vehicle combination - such as a tractor-trailer train, load train or passenger-car/caravan combination - with a measuring device (1.1, 1.2, 1.3, 1.4, 1.5, 1.6) for measuring forces and/or moments between a towing vehicle (18, 31) and a trailer vehicle (19), said measuring device having been constructed in accordance with one of the claims 1 to 13.
